# EUROPÄISCHE PATENTANMELDUNG

(11) **EP 2 559 516 A2**
(43) Veröffentlichungstag der Anmeldung: **20.02.2013**
(21) Anmeldenummer: 12177105.9
(22) Anmeldetag: 19.07.2012
(51) Int. Cl.: B23Q 3/155

(54) **Werkzeughalter für Werkzeugmagazin**

(30) Priorität: 18.08.2011 DE 102011081199
(71) Anmelder: Miksch GmbH, 73037 Göppingen (DE)
(72) Erfinder: Aschenbrenner, Franz, 73037 Göppingen (DE); Maier, Eberhard, 73037 Göppingen (DE); Thieme, Uwe, 73037 Göppingen (DE)
(74) Vertreter: TBK

(57) **Zusammenfassung**

Die Erfindung betrifft einen Werkzeughalter zum Halten eines in eine Werkzeugmaschine einsetzbaren Werkzeuges (1), das einen Spindelkopf als Werkzeugkopf (11) hat. Der Werkzeughalter hat eine Abstützung (2) zum Abstützen eines Werkzeuges (1) an dessen Umfang und eine Werkzeughalteeinrichtung (4) mit einem Lastaufnahmeelement (42), das an einem Längsende des Werkzeugs (1) am Werkzeugkopf (11) in das abgestützte Werkzeug (1) eingreiffähig ist oder in der Lage ist, einen Werkzeugkopf-Außenumfangsbereich am Längsende des abgestützten Werkzeugs (1) zu tragen. Die Werkzeughalteeinrichtung (4) ist in eine von der Abstützung (2) weg weisende Richtung bewegbar zum Aufheben des Eingriffs/Tragens am Werkzeugkopf (11).

## Beschreibung

Die vorliegende Erfindung bezieht sich auf einen Werkzeughalter. Genauer gesagt bezieht sich die vorliegende Erfindung auf einen Werkzeughalter zum Halten eines in eine Werkzeugmaschine einsetzbaren Werkzeuges, das eine Werkzeugaufnahme an seinem Ende aufweist.

In Werkzeugmaschinen werden unterschiedliche Werkzeuge eingespannt, die bei Nichtbenutzung in einem Magazin gelagert und dort in einem Werkzeughalter gehalten werden.

Die Aufgabe der vorliegenden Erfindung ist es, einen neuen vorteilhaften Werkzeughalter für solche Werkzeuge zu schaffen.

Diese Aufgabe ist durch neuen Werkzeughalter mit den Merkmalen von Anspruch 1 gelöst.

Vorteilhafte Weiterbildungen sind in den abhängigen Ansprüchen dargelegt.

Eine Werkzeughalteraufreihung ist in Anspruch 16 aufgezeigt.

In einem Werkzeughalter mit den Merkmalen des Anspruchs 1 wird auf einfache Weise bei einer geringen Anzahl an Bauteilen ein sicheres Lagern eines Werkzeugs ermöglicht.

Üblicherweise wird das Werkzeug mittels einer Werkzeugaufnahme, die an seinem Längsende ausgebildet ist, in die Werkzeugmaschine gesetzt.

Der grundsätzliche Aufbau von Werkzeugaufnahmen ist unabhängig vom Hersteller bedingt durch die Einspannvorrichtung an der Werkzeugmaschine häufig sehr ähnlich, da die äußere Form der Werkzeugaufnahme durch die Einbaumaße in der Werkzeugmaschine bestimmt wird. Um einen schnellen Werkzeugwechsel bei gleichzeitig hoher Genauigkeit zu gewährleisten, sind Werkzeugaufnahmen genormt.

Daher wird in vorteilhafter Weise im Werkzeughalter nach Anspruch 1 der charakteristische Aufbau der Werkzeugaufnahme bei einem Lagern von Werkzeugen in einem Werkzeughalter genutzt.

Die Werkzeughalter nach Anspruch 2 oder 3 erlauben eine einfache und schnelle Entnahme des gelagerten Werkzeugs. Dadurch kann das Werkzeug schnell einer Werkzeugmaschine zugeführt werden.

Die Werkzeughalter nach Anspruch 4 bis 8 oder 11 erlauben ein Aufnehmen des Kippmomentes des abgestützten Werkzeuges bei geringer Anzahl an Bauteilen.

Die Werkzeughalter nach Anspruch 9 oder 10 verhindern eine Längsverschiebung des abgestützten Werkzeugs 1 in einfacher aber sicherer Weise.

Die Werkzeughalter nach Anspruch 12 ermöglicht ein erleichtertes Einsetzen/Herausnehmen des Werkzeugs in den / von dem Werkzeughalter, da die Halteplatte durch eine einfache Drückbewegung am schrägen Flansch oder durch eine einfache Zugbewegung am Griff vom Werkzeug weg bewegbar ist.

Die Werkzeughalter nach Anspruch 13 sieht einen kompakten Aufbau vor, da das Tragegestell 45 und der senkrecht aufgerichtete Vorsprung 3 als ein einziges Bauteil angefertigt werden können. Die Zahl der Bauteile wird dadurch noch geringer. Außerdem kann durch die Lastaufnahme an der oberen Fläche des Tragegestells 45 die Werkzeuglast auf mehrere Elemente des Werkzeughalters verteilt werden.

Die Werkzeughalter nach Anspruch 14 weist des weiteren eine Auflageleiste 50 auf, auf der der Außenumfang der Werkzeugaufnahme 11 abstützbar ist. Bei einem eventuellen dynamischen Impuls, der das Werkzeug kurzzeitig entlastet, kann ein 'Aushängen' der Werkzeugaufnahme 11 verhindert werden.

Die Werkzeughalter nach Anspruch 15 weist des weiteren an der Werkzeughalteeinrichtung 4 an der Seite, die zur Abstützung 2 weist, eine Drückeinrichtung auf, die an der Werkzeughalteeinrichtung 4 in Anlage gebracht werden kann, um die die Werkzeughalteeinrichtung 4 von der Abstützung 2 weg zu biegen/klappen, wobei die Drückeinrichtung oberhalb des Lastaufnahmeelements 42 angreift. Dadurch kann die Werkzeughalteeinrichtung 4 automatisiert betätigt werden, was ein vollständig automatisiertes Ablegen und Aufnehmen eines Werkzeugs ermöglicht.

Die Werkzeughalteraufreihung nach Anspruch 16 schafft eine günstige Lagermöglichkeit einer Vielzahl an Werkzeugen.

Im Prinzip ist der Werkzeughalter so aufgebaut, dass ein Werkzeug an zwei Punkten (zwei Bereichen) abstützbar ist. Die Hauptlast des Werkzeugs wird durch die Abstützung 2 als erster Abstützpunkt (Abstützbereich) getragen, wobei die Abstützung 2 im Werkzeughalter an einer Stelle positioniert ist, an der sie sich näher zum Schwerpunkt des Werkzeugs befindet als der zweite Abstützpunkt. Der zweite Abstützpunkt (Abstützbereich) ist an dem Endbereich der Werkzeugaufnahme, der dem Werkzeughauptkörper entgegengesetzt ist, ausgebildet. Der zweite Abstützpunkt kann das Kippmoment des durch den ersten Abstützpunkt abgestützten Werkzeugs aufnehmen. Dabei bildet der zweite Abstützpunkt eine zu der Seite, die vom Werkzeug weg weist, wegbewegbare Abstützung. Beim Abstützen kann das Lastaufnahmeelement 42 als zweiter Abstützpunkt in die Werkzeugaufnahme einfahren oder eingreifen und kann eine formschlüssige Kippmomentaufnahme für das gehaltene Werkzeug bilden. Das Kippmoment kann an der Oberseite und/oder Unterseite des Lastaufnahmeelements 42 aufgenommen werden. Das Lastaufnahmeelement 42 kann am Außenumfang und/oder Innenumfang des Stirnbereichs (Endbereichs) der Werkzeugaufnahme angreifen. Soll das Werkzeug entnommen werden, kann das Lastaufnahmeelement 42 seitlich vom Werkzeug wegbewegt werden, bis das Lastaufnahmeelement 42 eine Entnahme des Werkzeugs nach oben nicht mehr behindert. Eine Längsverschiebung des gelagerten Werkzeugs kann durch die am Werkzeug eingreiffähige Längsverschiebeverhinderung 3 verhindert werden. Diese Längsverschiebeverhinderung 3 kann ein senkrecht aufgerichteter Vorsprung sein und kann am Umfang des Werkzeugs in dieses eingreifen. Die Längsverschiebeverhinderung 3, die Werkzeughalteeinrichtung 4 und die Abstützung 2 können einstückig gestaltet sein oder als separate Bauteile ausgebildet sein, die auf einem Basiselement (z.B. Bodenplatte) des Werkzeughalters sitzen. In dem Werkzeughalter sind Werkzeuge 1 einsetzbar, die einen Schwerpunkt haben, der in horizontaler Richtung von der Werkzeughalteeinrichtung 4 aus gesehen hinter der Abstützung 2 sitzt. An der Werkzeughalteeinrichtung 4 kann an der Seite, die zur Abstützung 2 weist, eine Drückeinrichtung wie z.B. eine Rolle in Anlage gebracht werden, die die Werkzeughalteeinrichtung 4 von der Abstützung 2 weg biegt/klappt, wobei die Drückeinrichtung oberhalb der Lastaufnahmeelement 42 angreift.

### Kurzbeschreibung der Zeichnungen

Fig. 1 zeigt einen Werkzeughalter gemäß einem ersten Ausführungsbeispiel der vorliegenden Erfindung mit einem Werkzeug in einer perspektivischen Darstellung.
Fig. 2 zeigt den Werkzeughalter von Fig. 1 in einer Schnittdarstellung.
Fig. 3 zeigt einen Werkzeughalter gemäß einer Abwandlung des fünften Ausführungsbeispiels der vorliegenden Erfindung.
Fig. 4 zeigt Alternativen eines Werkzeughalters der vorliegenden Erfindung.

Nachstehend ist die vorliegende Erfindung detailliert anhand von Ausführungsbeispielen erläutert.

### Erstes Ausführungsbeispiel

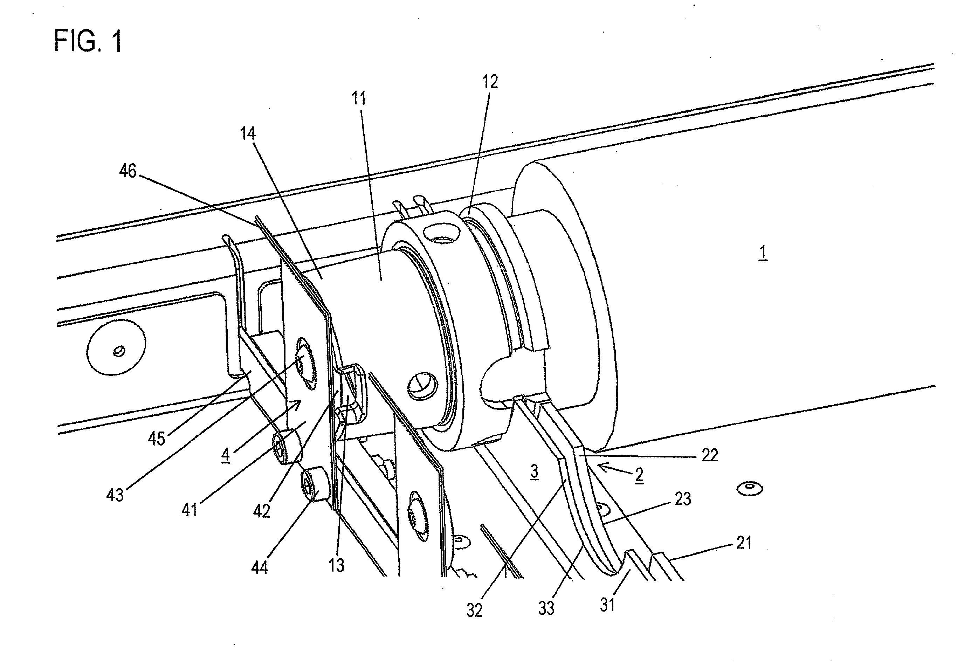

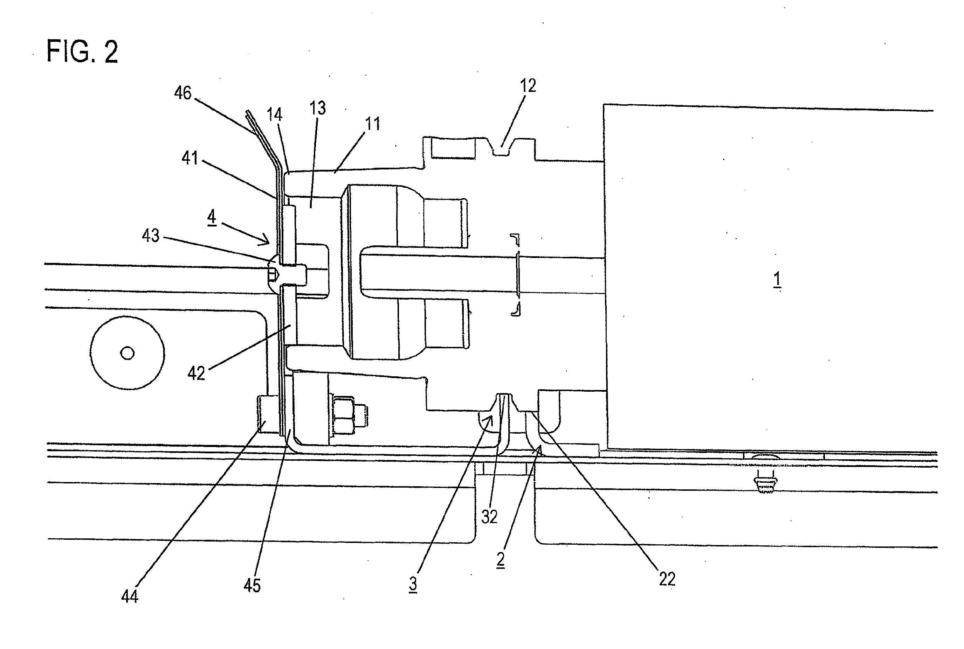

Fig. 1 zeigt einen Werkzeughalter gemäß einem ersten Ausführungsbeispiel der vorliegenden Erfindung mit einem Werkzeug in einer perspektivischen Darstellung. Fig. 2 zeigt dessen Schnittdarstellung (im Längsschnitt). Das im erfindungsgemäßen Werkzeughalter zu haltende Werkzeug ist beispielsweise ein Werkzeug, das in einer Werkzeugmaschine eingesetzt werden kann. Derartige Werkzeuge haben eine Vielzahl an Aufgaben und somit sehr verschiedene Ausführungen, sind aber in der Regel mit einer gleichartigen Werkzeugaufnahme ausgestattet, mit dem das Werkzeug in die Werkzeugmaschine eingesetzt wird. Das Werkzeug 1 des vorliegenden Ausführungsbeispiels weist eine derartige Werkzeugaufnahme 11 auf, wie dies in Fig. 1 dargestellt ist. Typischerweise sind derartige Werkzeuge 1 auch mit einer am Außenumfang des Werkzeugs 1 verlaufenden Nut 12 als Greiferrille ausgestattet. Im vorliegenden Beispiel ist eine solche Nut 12 am Außenumfang der Werkzeugaufnahme 11 in einem Bereich ausgebildet, der nahe zu dem Hauptkörper des Werkzeugs 1 ist.

Der Werkzeughalter des vorliegenden Ausführungsbeispiels besteht aus einer Abstützung 2, einer Längsverschiebeverhinderung (Eingriffsvorsprung) 3 und einer Werkzeughalteeinrichtung 4. Die Abstützung 2, die Längsverschiebeverhinderung 3 und die Werkzeughalteeinrichtung 4 sind auf einer Bodenplatte befestigt.

Die Abstützung 2 ist als eine Wand 21 ausgebildet, die an ihrer oberen d.h. zu der Bodenplatte entgegengesetzten Seite eine Ausnehmung 23 besitzt, die im vorliegenden Beispiel eine halbkreisartige konkave Form hat. In der Ausnehmung 23 dient die obere Seite als Auflagefläche 22, wobei sie horizontal in Richtung der Längsachse des zu lagernden Werkzeugs verläuft. Die Auflagefläche 22 ist so ausgebildet, dass sie konzentrisch zu einer Werkzeugachse des zu lagernden Werkzeugs verläuft.

Die Längsverschiebeverhinderung 3 bildet einen Eingriffsvorsprung 3 aus und ist in diesem Ausführungsbeispiel ebenfalls als eine Wand 31 aufgebaut, die an ihrer oberen Seite eine konkave Ausnehmung 33 aufweist, wobei in der Ausnehmung 33 die obere Fläche der Wand 31 eine Auflagefläche 32 ausbildet, die eine sich in Achsrichtung des einzulegenden Werkzeugs horizontale Erstreckung haben kann. Im vorliegenden Ausführungsbeispiel ist somit die Wand 31 des Eingriffsvorsprungs 3 ähnlich aufgebaut zu der Wand 21 der Abstützung 2. Die Wand 31 und die Wand 21 verlaufen parallel zueinander.

Die Werkzeughalteeinrichtung 4 ist im vorliegenden Ausführungsbeispiel hauptsächlich durch eine elastische Halteplatte 41 gebildet, die aus einem elastischen, d.h. biegsamen Material besteht. Die Halteplatte 41 ist an ihrer unteren Seite mittels Befestigungseinrichtungen 44 (Schrauben, Nieten, etc.) an einem Tragegestell 45 so befestigt, dass die Halteplatte 41 nach oben senkrecht aufgestellt ist. Im mittleren Bereich der als Rechteck ausgebildeten Halteplatte 41 ist mittels einer Befestigungseinrichtung 43 (Schraube, Niet, etc.) ein Lastaufnahmeelement 42 an der Halteplatte 41 befestigt. Im vorliegenden Ausführungsbeispiel ist das Lastaufnahmeelement eine Werkzeughalteeingriffseinrichtung 42 und ist als eine Scheibe ausgebildet. An der oberen Seite der Halteplatte 41, d.h. an der Seite, die von der Befestigungseinrichtung 43 entgegengesetzt ist, ist ein Flansch 46 winklig so ausgebildet, dass er von der Abstützung 2 weg geneigt ist, wie dies in Fig. 1 dargestellt ist.

Die Werkzeughalteeinrichtung 4 ist in horizontaler Richtung von der Abstützung 2 so weit beabstandet, dass ein Werkzeug 1 in den Werkzeughalter so eingelegt werden kann, dass die Werkzeugaufnahme 11 des Werkzeugs 1 an seiner Stirnfläche an der Halteplatte 41 anliegt und seine Umfangsfläche in einem Bereich, der an den Werkzeughauptkörper angrenzt, an der Abstützung 2 aufliegt.

Das Werkzeug 1 wird nunmehr auf der Abstützung so abgelegt, dass die Auflagefläche 22 das Werkzeug 1 stützt. Im vorliegenden Beispiel befindet sich der Schwerpunkt des Werkzeugs 1 rechts der Abstützung 2 in Fig. 1. Um ein Abkippen des Werkzeugs 1 in der in der Zeichnung nach rechts unten weisenden Richtung aufgrund des Eigengewichts des Werkzeugs zu vermeiden, wird das Werkzeug 1 so gelagert, dass die Werkzeughalteeingriffseinrichtung 42, d.h. die Scheibe, in die zentrische Vertiefung 13 an der Werkzeugaufnahme 11 eingesetzt wird. Somit liegt die Außenfläche der Scheibe der Werkzeughalteeingriffseinrichtung 42 an der Wand 14, genauer gesagt an einem unteren Bereich der Innenwand der zentrischen Vertiefung 13 an der Werkzeugaufnahme 11 an, wie dies in Fig. 2 gezeigt ist. Ein Kippmoment des Werkzeugs 1 wird daher über die Wand 14 zu der Scheibe der Werkzeughalteeingriffseinrichtung 42 übertragen. Somit wird das Abkippen des Werkzeugs 1 vermieden.

Dabei kann in einer Abwandlung des Ausführungsbeispiels der Werkzeughalter auch so aufgebaut und dimensioniert sein, dass zusätzlich eine untere Außenfläche der Wand 14 der Werkzeugaufnahme 11 auf einer oberen Fläche des Tragegestells 45 lagert, siehe Fig. 2. Für ein Lagern des Werkzeugs 1 ist es aber bereits ausreichend, dass das Werkzeug 1 auf der Auflagefläche 22 und mit der Innenseite der Wand 14 an der unteren Außenfläche der Werkzeughalteeingriffseinrichtung 42 anliegt.

Wenn das Werkzeug 1 aus dem Werkzeughalter entnommen werden soll, wird das Werkzeug 1 an seinem Hauptkörper ergriffen und am Flansch 46 wird die Werkzeughalteeinrichtung 4, d.h. die Halteplatte 41, vom Werkzeug 1 weg gebogen. Da die Halteplatte 41 aus einem elastischen Material ist und in einer, für diesen Biegevorgang geeigneten Dicke hergestellt ist, federt quasi die Halteplatte 41 und kann leicht vom Werkzeug 1 weg gebogen werden. Beim Wegbiegen der Halteplatte 41 fährt die als Scheibe ausgebildete Werkzeughalteeingriffseinrichtung 42 aus der zentrischen Vertiefung 13 an der Werkzeugaufnahme 11 aus und gibt die Werkzeugaufnahme 11 frei. Das Werkzeug kann nunmehr entnommen werden.

Der Flansch 46 erleichtert das Wegbiegen der Halteplatte 41, ohne beim Einsetzen des Werkzeugs 1 zu stören, da der Werkzeughalter aufgrund der geneigten Anordnung des Flansches 46 von oben leicht zugänglich ist.

Das Material der Halteplatte 41 kann Federstahl sein, aber auch ein beliebiges anderes Material, das eine ausreichende Stabilität als Halteplatte hat und eine federnde oder elastische Wirkung aufzeigt, die ein nach außen gerichtetes Wegbiegen der Halteplatte gestattet, kann angewendet werden.

Vorteilhaft sind das Tragegestell 45 und die Wand 31 des Eingriffsvorsprungs 3 miteinander verbunden und als ein einziges Bauteil angefertigt, wie dies in Fig. 2 gezeigt ist. Alternativ können beide Elemente auch separate Bauteile sein.

Vorteilhaft ist die horizontale Fläche der Wand 31 in der Ausnehmung 33 eine Auflagefläche 32, an der der Boden der Nut 12 des Werkzeugs 1 aufliegt. Die Fläche 32 kann aber auch bei abgelegtem Werkzeug 1 zum Boden der Nut 12 beabstandet sein, wobei das Werkzeug 1 auf der Auflagefläche 22 aufliegt.

In dem Werkzeughalter sind Werkzeuge 1 einsetzbar, die einen Schwerpunkt haben, der in horizontaler Richtung von der Werkzeughalteeinrichtung 4 aus gesehen hinter der Abstützung 2 sitzt.

### Zweites Ausführungsbeispiel

Im ersten Ausführungsbeispiet ist der Eingriffsvorsprung 3 als eine Wand 31 ausgebildet. Diese Wand 31 greift, bei auf der Auflagefläche 22 der Abstützung 2 abgelagerten Werkzeug 1, in die Nut 12 des Werkzeugs 1 ein. Im vorliegenden Ausführungsbeispiel, das in den Zeichnungen nicht dargestellt ist, ist dieser Eingriffsvorsprung 3 durch einen an der Bodenplatte mit oder ohne Zwischenelement befestigten annähernd senkrecht stehenden Stift ausgebildet, der eine derartige Länge hat, dass er, bei auf der Auflagefläche 22 abgestütztem Werkzeug, von unten in die Nut 12 hineinragt. Der obere Abschnitt dieses Stiftes, der in die Nut 12 des Werkzeugs 1 hineinragt, verhindert eine in Längsrichtung erfolgende Verschiebung des Werkzeugs 1 bei abgestütztem Werkzeug. Anstelle eines Stiftes können auch mehrere derartige Stifte angewendet werden, deren oberer Abschnitt in die Nut 12 am Werkzeug 1 bei abgestütztem Werkzeug hineinragen.

Die obere Fläche des Stifts des Eingriffsvorsprungs 3 kann auch so ausgebildet sein, dass der Stift nicht nur in die Nut 12 am Werkzeug 1 hineinragt, sondern, bei auf der Auflagefläche 22 der Abstützung 2 abgestütztem Werkzeug 1, sich bis zu einer derartigen Höhe erstreckt, dass die obere Fläche des Stifts ebenfalls als Auflagefläche dient. In diesem Fall wird die Funktion der Auflagefläche für das Abstützen des Gewichts des Werkzeugs 1 nicht nur durch die Auflagefläche 22 der Abstützung 2, sondern auch durch die Auflagefläche (Stirnfläche) 32 des Stifts des Eingriffsvorsprungs 3 wahrgenommen.

Der Stift des Eingriffsvorsprungs 3 muss nicht unbedingt senkrecht auf der Bodenplatte stehen. Er kann auch winklig zur Bodenplatte so angeordnet sein, dass er tangential in die in die Nut (Greiferrille) 12 eines abgelegten Werkzeugs hineinragt.

Es können auch zwei schräg stehende Stifte, die die Form eines umgekehrten V ausbilden, auf der Bodenplatte so angeordnet sein, dass der Bereich, in dem die Stifte als Schenkel des V zusammentreffen, die Oberseite des Eingriffsvorsprungs 3 bildet.

Alternativ kann der Eingriffsvorsprung 3 auch durch einen Wandabschnitt der Wand 31 gebildet werden. In diesem Fall erstreckt sich die Wand 31 nicht entlang der gesamten Nut 12 des Werkzeugs 1, sondern nur in einem Abschnitt der Nut 12. Eine derartige Wand kann durch eine rechteckige Platte ausgebildet sein, die senkrecht aufgestellt ist und deren obere Stirnfläche an die Kontur der Eingriffsnut 12 angepasst ist.

### Drittes Ausführungsbeispiel

Im ersten Ausführungsbeispiel ist die Halteplatte 41 der Werkzeughalteeinrichtung 4 als eine elastische und biegbare Platte ausgebildet. Im vorliegenden dritten Ausführungsbeispiel, das in den Zeichnungen nicht dargestellt ist, weist die Werkzeughalteeinrichtung 4 anstelle der biegbaren Halteplatte 41 eine Platte auf, die über ein Gelenk (z.B. Scharnier) am Tragegestell 45 angelenkt ist. Dieses Gelenk kann z.B. mittels eines Sperrstifts oder auf andere Weise arretiert werden, wobei im arretierten Zustand der Halteplatte die Halteplatte senkrecht steht. Wenn das Werkzeug aus dem Werkzeughalter entnommen werden soll, wird das Gelenk entsperrt und die Halteplatte vom Werkzeug 1 weg um das Gelenk geklappt. Mittels einer Feder kann die am Gelenk schwenkbare Halteplatte zu dem Werkzeug 1 hin, d.h. zu der Abstützung 2 hin, vorgespannt sein.

### Viertes Ausführungsbeispiel

Im ersten Ausführungsbeispiel ist die Werkzeughalteeingriffseinrichtung 42 als eine Scheibe ausgebildet. Diese Scheibe greift in die zentrische Vertiefung 13 an der Werkzeugaufnahme 11 ein, wobei die Außenwand der Scheibe der Werkzeughalteeingriffseinrichtung 42 mit der Innenfläche der Wand 14 an der Werkzeugaufnahme 11 anliegt. Dabei wird im unteren Bereich der Scheibe der Werkzeughalteeingriffseinrichtung 42 das Kippmoment übertragen, wenn das Werkzeug 1 einen Schwerpunkt hat, der in horizontaler Richtung von der Werkzeughalteeinrichtung 4 aus gesehen hinter der Abstützung 2 sitzt.

Im vorliegenden Ausführungsbeispiel, das in den Zeichnungen nicht dargestellt ist, wird die Funktion der Kippmomentübertragung nicht durch eine Scheibe, sondern durch ein Element wahrgenommen, das lediglich an der Innenfläche des unteren Bereichs der Wand 14 bei abgestütztem Werkzeug 1 anliegt. Ein solches Element kann eine Art Halbscheibe sein, die durch Befestigungsschrauben 43 an der Halteplatte 41 befestigt ist und sich lediglich nach unten erstreckt, so dass die Innenfläche der Wand 14 an der Unterkante dieser Halbscheibe anliegt, wenn das Werkzeug 1 abgestützt ist. Die Werkzeughalteeingriffseinrichtung des ersten Ausführungsbeispiels und der Halbscheibe sind an die Kontur der Innenfläche der Wand 14 angepasst. In einer weiteren Alternative kann die Werkzeughalteeingriffseinrichtung 42 so ausgebildet sein, dass sie durch die Befestigungseinrichtung 43 an der Halteplatte 41 befestigt vom Befestigungsort nach unten stiftartig als runder Stift oder als Vierkant vorragt, wobei die zum Boden hin weisende Stirnfläche dieses Stifts an der Innenfläche der Wand 14 der Werkzeugaufnahme 11 bei abgestütztem Werkzeug 1 anliegt und das Kippmoment aufnimmt, das von dem Werkzeug 1 auf die Halteplatte 41 übertragen wird. Diese Stirnfläche ist vorzugsweise derart abgerundet, dass sie an die Kontur der Innenfläche der Wand 14 der Vertiefung 13 an der Werkzeugaufnahme 11 angepasst ist.

### Fünftes Ausführungsbeispiel

Im ersten Ausführungsbeispiel greift die Werkzeughalteeingriffseinrichtung 42 als Scheibe in die zentrische Vertiefung 13 an der Werkzeugaufnahme 11 ein. In der Grundform des vorliegenden Ausführungsbeispiels, die in den Zeichnungen nicht gezeigt ist, umgreift die Werkzeughalteeingriffseinrichtung die Werkzeugaufnahme 11 von außen. Somit ist im vorliegenden Ausführungsbeispiel die Werkzeughalteeingriffseinrichtung als ein Ring ausgebildet, dessen Innendurchmesser so groß ist, dass die Außenfläche der Werkzeugaufnahme 11, d.h. die Außenfläche der Wand 14 in den Ring bei abgestütztem Werkzeug 1 eingesetzt wird. Der Ring ist an der Halteplatte 41 der Werkzeughalteeinrichtung 4 befestigt. Somit nimmt die Innenfläche des Ringes über die Außenfläche der Wand 14 an der Werkzeugaufnahme 11 das Kippmoment des Werkzeugs 1 auf.

Alternativ kann diese Werkzeughalteeingriffseinrichtung des fünften Ausführungsbeispiels auch so ausgebildet sein, dass sie keinen vollständigen Ring ausbildet, der die Wand 14 der Werkzeugaufnahme 11 außen umgibt, sondern kann ein Ringabschnitt sein, der lediglich die obere Seite der Wand 14 der Werkzeugaufnahme 11 bei abgestütztem Werkzeug 1 umgibt. Dieser Ringabschnitt ist an seiner Innenfläche, d.h. die zum Boden weisende Fläche, an die Kontur der Wand 14 der Werkzeugaufnahme 11 angepasst und nimmt das Kippmoment bei abgestütztem Werkzeug 1 auf.

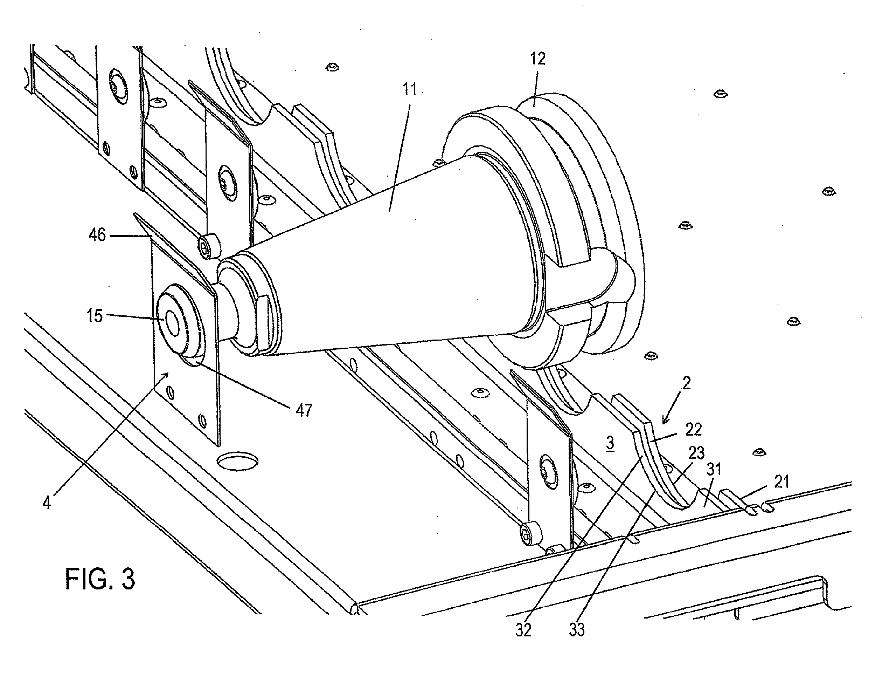

Fig. 3 zeigt einen Werkzeughalter gemäß einer Abwandlung des fünften Ausführungsbeispiels der vorliegenden Erfindung. In dieser Abwandlung ist am Ende der Werkzeugaufnahme 11 ein Anzugsbolzen 15 vorgesehen. Die Halteplatte der Werkzeughalteeinrichtung 4 weist eine zentrische Öffnung 47 auf, durch die beim Ablegen des Werkzeugs der Anzugsbolzen 15 eingeführt wird. In abgelegter Stellung liegt die Oberseite des Anzugsbolzens 15 am oberen Innenumfang der Öffnung 47 an. Der obere Innenumfang der Öffnung 47 nimmt dann das Kippmoment des Werkzeugs auf.

In einer Alternative zu der Abwandlung von Fig. 3 ist die Öffnung 47 so groß ausgebildet, dass die Werkzeugaufnahme 11 in die Öffnung 47 eingeführt werden kann. Der Abstand zwischen der Längsverschiebeverhinderung 3 und der Halteplatte der Werkzeughalteeinrichtung 4 ist so gewählt, dass der obere Innenumfang der Öffnung 47 dann das Kippmoment des Werkzeugs über die Oberseite der Werkzeugaufnahme 11 aufnimmt.

Vorstehend ist die vorliegende Erfindung anhand von Ausführungsbeispielen beschrieben.

Weitere Ausführungsbeispiele sind denkbar. Beispielsweise kann, wenn ein Auftreten einer Längsverschiebung des gelagerten Werkzeugs 1 wenig wahrscheinlich ist, der Eingriffsvorsprung 3 gänzlich weggelassen werden, so dass der Werkzeughalter lediglich aus der Abstützung 2 und der Werkzeughalteeinrichtung 4 besteht.

Der Flansch 46 erleichtert den Schwenkvorgang der Halteplatte 41 der Werkzeughalteeinrichtung 4 bei der Entnahme des Werkzeugs 1. Anstelle des Flansches 46, der im ersten Ausführungsbeispiel und in der Zeichnung gezeigt nach außen, d.h. vom Werkzeug 1 weg geneigt, gestaltet ist, kann ein Griff an der Halteplatte 41 an der von der Abstützung 2 abgewandten Seite ausgebildet sein. Mittels des Griffes kann die Halteplatte 41 dann vom Werkzeug weg gebogen oder geschwenkt werden.

Der Flansch 46 des ersten Ausführungsbeispiels kann auch weggelassen werden. Dann ist die Halteplatte 41 lediglich als senkrechte stehende Halteplatte 41 ausgebildet. Dies sorgt für eine einfache und somit kostengünstige Herstellung des Werkzeughalters.

In einer weiteren Ausführung der Erfindung kann eine Drückeinrichtung an der Halteplatte 41 an der Seite, die zur Abstützung 2 weist, vorgesehen sein. Die Drückeinrichtung kann an der Halteplatte 41 in Anlage gebracht werden und die Halteplatte 41 in der von der Abstützung 2 weg weisenden Richtung biegen oder klappen. Die Drückeinrichtung greift vorzugsweise oberhalb des Lastaufnahmeelements 42 und somit oberhalb des abzulegenden Werkzeugs an.

Die Drückeinrichtung kann aus einer Rolle bestehen, die auf einer Welle gelagert durch einen beweglichen Abstützarm zur Halteplatte 41 und von der Halteplatte 41 weg bewegbar ist. Durch die anhand des Abstützarms geführte Schwenkbewegung der Rolle drückt diese an der Halteplatte 41 und neigt die Halteplatte 41 in der von der Abstützung 2 weg weisenden Richtung, um ein Werkzeug einzusetzen oder zu entnehmen. In einer vereinfachten Variante kann die Drückeinrichtung aus einem Haken bestehen. Die Drückeinrichtung kann insbesondere dann angewendet werden, wenn die Halteplatte 41 lediglich als senkrechte stehende Halteplatte 41 aus Federstahl ausgebildet ist.

Durch die Anwendung der Drückeinrichtung kann der Werkzeughalter automatisiert betätigt werden, was ein vollständig automatisiertes Ablegen und Aufnehmen eines Werkzeugs bei einem automatisierten Neigen der Halteplatte 41 ermöglicht.

In einer Anwendung des Werkzeughalters sind mehrere Werkzeughalter benachbart zueinander als eine Werkzeughalteraufreihung so ausgebildet, wie dies in Fig. 1 dargestellt ist. Die Abstützung 2 ist als länglicher quaderartiger Wandkörper ausgebildet, der senkrecht stehend ausgebildet ist, und in geeigneten Abständen die Ausnehmungen 23 für die Aufnahme des Werkzeugs aufweist. Der Abstand von einer Ausnehmung 23 zur nächsten Ausnehmung 23 ergibt sich durch die Größe der abzustützenden Werkzeuge 1. In entsprechender Weise sind den Ausnehmungen 23 der Abstützung 2 zugeordnet am Tragegestell 45 die Halteplatten 41 für ein jeweiliges Aufnehmen des Kippmomentes des abgestützten Werkzeugs 1 angeordnet. Das heißt an einem Tragegestell 45 sind entlang dessen Längsrichtung mehrere Halteplatten 41 über die Befestigungseinrichtungen 44 (Schrauben) befestigt.

Das Lastaufnahmeelement 42 kann an der Halteplatte 41 entfernbar (lösbar) oder dauerhaft (z.B. angeschweißt) befestigt sein. Durch Austauschen des Lastaufnahmeelements 42 in verschiedenen Größen an der Halteplatte 41 kann der gleiche Ablageplatz für verschiedenartige Werkzeuge, die eine jeweils unterschiedliche Werkzeugaufnahme haben, durch einen einfachen Umbau genutzt werden. Das bisherige Lastaufnahmeelement 42 wird demontiert und durch ein Lastaufnahmeelement 42 ersetzt, das an die Werkzeugaufnahme des neuen zu lagernden Werkzeugs angepasst ist.

In einer weiteren Alternative ist der Werkzeughalter so aufgebaut, das ein oberer Abschnitt der Innenfläche der Wand 14 an der Vertiefung 13 der Werkzeugaufnahme 11 an der oberen Außenfläche des Lastaufnahmeelements 42 anliegen kann, oder bei am Außenumfang der Wand 14 der Werkzeugaufnahme 11 abstützendem Lastaufnahmeelement 42 ein unterer Abschnitt der Außenfläche der Wand 14 an einer nach oben weisenden Fläche (z.B. Ringinnenseite) des Lastaufnahmeelements 42 anliegen kann.

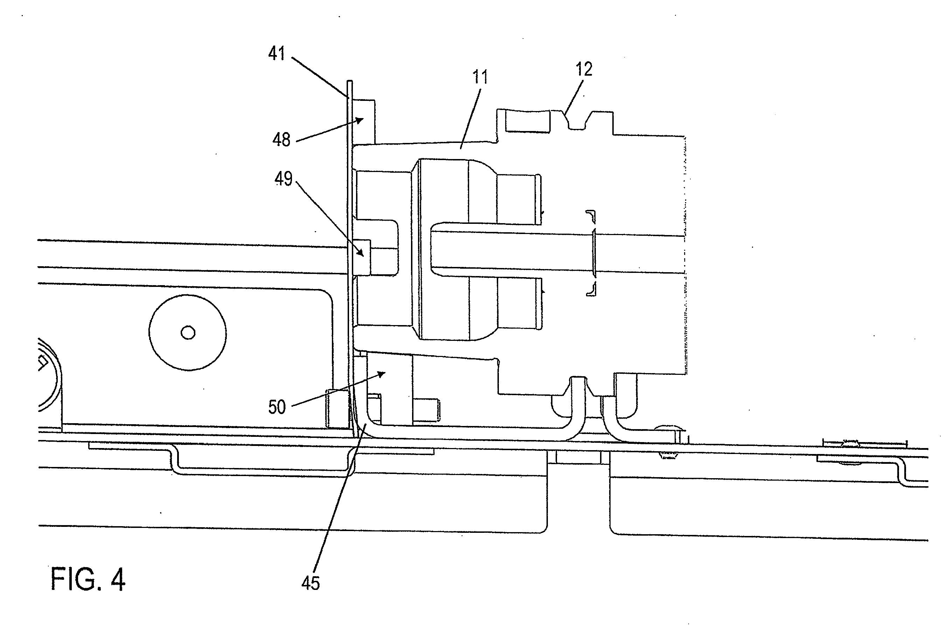

Fig. 4 zeigt weitere Alternativen eines Werkzeughalters der vorliegenden Erfindung.

In einer weiteren Alternative ist die Werkzeughalteeingriffseinrichtung lediglich als eine Nase 48 als Oberseitenstütze ausgebildet, die von der Halteplatte 41 der Werkzeughalteeinrichtung zu der Seite der Abstützung 2 hin vorragt und in einer derartigen Höhe an der Halteplatte 41 angebracht ist, dass sie bei abgestütztem Werkzeug 1 am dann oberen Bereich der Werkzeugaufnahme 11 an der Außenfläche der Wand 14 der Werkzeugaufnahme 11 anliegt. Dann kann diese Nase 48 das Kippmoment des abgestützten Werkzeugs 1 aufnehmen. Die Nase 48 kann als Stift, Zylinder, Vierkant oder dergleichen ausgebildet sein.

Anstelle dieser Nase kann als Oberseitenstütze ein Formelement 48 an der Halteplatte an der Seite, die zur Längsverschiebeverhinderung 3 weist, befestigt sein. Das Formelement 48 hat an der Unterseite eine Form, die an den Außenumfang der Werkzeugaufnahme 11, d.h. an die Kontur der Werkzeugaufnahme 11, angepasst ist. In abgelegter Stellung liegt die Oberseite der Werkzeugaufnahme 11 an der Unterseite des Formelementes 48 an. Die Unterseite des Formelementes 48 nimmt dann das Kippmoment des Werkzeugs auf.

In Fig. 4 ist mit dem Bezugszeichen 49 ein Querelement bezeichnet, das an der Halteplatte an der Seite, die zur Längsverschiebeverhinderung 3 weist, befestigt ist. Das Querelement 19 hat eine derartige Form, dass es in eine Nut an der Endseite der Werkzeugaufnahme 11 hineinpasst. In abgelegter Stellung liegt die Innenseite der Nut der Werkzeugaufnahme 11 an der Unterseite des Querelementes 49 an. Die Unterseite des Querelementes 49 nimmt dann das Kippmoment des Werkzeugs auf.

In Fig. 4 ist mit dem Bezugszeichen 50 eine Auflageleiste bezeichnet, die an der Halteplatte an der Seite, die zur Längsverschiebeverhinderung 3 weist, befestigt ist. Vorzugsweise ist die Auflageleiste 50 an der Halteplatte durch die Befestigungseinrichtung 44 befestigt, kann aber auch durch eine von der Befestigungseinrichtung 44 separate Befestigungseinrichtung befestigt sein. Die Auflageleiste 50 weist eine obere Fläche auf, auf der der Außenumfang der Werkzeugaufnahme 11 ablegbar ist. Die obere Fläche kann an den Außenumfang der Werkzeugaufnahme 11 angepasst sein. Alternative kann die obere Fläche der Auflageleiste 50 eine schräg verlaufende Fläche mit einer zur Längsverschiebeverhinderung 3 hin abnehmenden Höhe (siehe Fig. 4) oder eine sich horizontal erstreckende Fläche sein. Die Auflageleiste 50 dient dabei dazu, bei einem eventuellen dynamischen Impuls, der das Werkzeug kurzzeitig entlastet (z.B. beim Transport beim Überfahren eines Absatzes) ein 'Aushängen' der Werkzeugaufnahme 11 zu verhindern. Die Auflageleiste 50 muß nicht an der Halteplatte befestigt sein, sondern kann auch von der Halteplatte beabstandet angeordnet sein. Die Auflageleiste 50 zu kann jedem der vorstehend erläuterten Ausführungsbeispielen oder Alternativen hinzugefügt werden.

Obwohl der erfindungsgemäße Werkzeughalter für Werkzeuge gedacht ist, die in Werkzeugmaschinen eingesetzt werden und daher die charakteristische und genormte Werkzeugaufnahme aufweisen, kann der Werkzeughalter auch für andere Werkzeuge angewendet werden.

Kombinationen aus den vorstehend beschriebenen Ausführungsbeispielen sind denkbar.

### Bezugszeichenliste

- 1: Werkzeug
- 11: Werkzeugaufnahme
- 12: Nut
- 13: Vertiefung an der Werkzeugaufnahme
- 14: Wand
- 15: Anzugsbolzen
- 2: Abstützung
- 21: Wand
- 22: Auflagefläche
- 23: Ausnehmung
- 3: Längsverschiebeverhinderung, Eingriffsvorsprung
- 31: Wand
- 32: Auflagefläche
- 33: Ausnehmung
- 4: Werkzeughalteeinrichtung
- 41: Halteplatte
- 42: Lastaufnahmeelement, Werkzeughalteeingriffseinrichtung
- 43: Befestigungseinrichtung
- 44: Befestigungseinrichtung
- 45: Tragegestell
- 46: Flansch
- 47: Öffnung
- 48: Oberseitenstütze an der Halteplatte
- 49: Querelement an der Halteplatte
- 50: Auflageleiste

## Patentansprüche

1. Werkzeughalter zum Halten eines in eine Werkzeugmaschine einsetzbaren Werkzeuges (1), das eine Werkzeugaufnahme (11) an seinem Ende hat, wobei der Werkzeughalter folgendes aufweist:
eine Abstützung (2) zum Abstützen eines Werkzeuges (1) an dessen Umfang,
eine Werkzeughalteeinrichtung (4) mit einem Lastaufnahmeelement (42), das an einem Längsende des Werkzeugs (1) an der Werkzeugaufnahme (11) in das abgestützte Werkzeug (1) eingreiffähig ist oder in der Lage ist, einen Werkzeugaufnahme-Außenumfangsbereich am Längsende des abgestützten Werkzeugs (1) zu tragen;
wobei die Werkzeughalteeinrichtung (4) in eine von der Abstützung (2) weg weisende Richtung bewegbar ist zum Aufheben des Eingriffs/Tragens an der Werkzeugaufnahme (11).

2. Werkzeughalter gemäß Anspruch 1, wobei
die Werkzeughalteeinrichtung (4) aus einem elastischen Material ausgebildet ist und in die von der Abstützung (2) weg weisende Richtung biegbar ist zum Aufheben des Eingriffs/Tragens an der Werkzeugaufnahme (11).

3. Werkzeughalter gemäß Anspruch 1, wobei
die Werkzeughalteeinrichtung (4) ein sperrbares Gelenk aufweist und in die von der Abstützung (2) weg weisende Richtung klappbar ist zum Aufheben des Eingriffs/Tragens an der Werkzeugaufnahme (11) bei entsperrtem Gelenk.

4. Werkzeughalter gemäß einem der Ansprüche 1 bis 3, wobei
an der Werkzeughalteeinrichtung (4) an der zur Abstützung (2) weisenden Seite als Lastaufnahmeelement (42) eine Werkzeughalteeingriffseinrichtung (42) angebracht ist zum formschlüssigen Halten eines Endes der Werkzeugaufnahme (11) bei abgestütztem Werkzeug.

5. Werkzeughalter gemäß Anspruch 4, wobei
die Werkzeughalteeingriffseinrichtung (42) ein Vorsprung ist, der in eine Vertiefung (13) an der Werkzeugaufnahme (11) einfahrbar ist.

6. Werkzeughalter gemäß Anspruch 5, wobei
der Vorsprung (42) eine Scheibe, ein Scheibensektor oder ein Stift ist und zumindest am unteren mittleren Bereich an der Innenseite einer Vertiefungswand am Werkzeugende anlagefähig ist.

7. Werkzeughalter gemäß Anspruch 4, wobei
die Werkzeughalteeingriffseinrichtung (42) ein Vorsprung ist, der an der Außenumfangsseite der Werkzeugaufnahme (11) anlagefähig ist.

8. Werkzeughalter gemäß Anspruch 7, wobei
die Werkzeughalteeingriffseinrichtung (42) ein Ring, ein Ringabschnitt oder ein Stift ist und zumindest im mittleren Bereich an der Oberseite der Außenumfangsseite der Werkzeugaufnahme (11) anlagefähig ist.

9. Werkzeughalter gemäß einem der Ansprüche 1 bis 8, wobei
der Werkzeughalter eine Längsverschiebeverhinderung (3) aufweist, auf die eine Vertiefung (12) des Werkzeugs (1) an dessen Außenumfangsfläche aufsetzbar ist.

10. Werkzeughalter gemäß Anspruch 9, wobei
die Längsverschiebeverhinderung (3) als senkrecht aufgerichteter Vorsprung (3) ein oder mehrere Stifte, eine Wand oder ein Wandabschnitt ist, der/die in eine umlaufende Nut (12) als Vertiefung an der Außenumfangsfläche des Werkzeugs (1) einführbar ist, wobei der senkrecht aufgerichtete Vorsprung (3) an die Nut des Werkzeugs (1) maßlich angepasst ist.

11. Werkzeughalter gemäß einem der Ansprüche 1 bis 10, wobei
die Werkzeughalteeinrichtung (4) eine senkrecht stehende Halteplatte (41) als Anlagefläche für die Stirnfläche der Werkzeugaufnahme (11) aufweist, wobei die Halteplatte (41) an einem Tragegestell (45) befestigt ist.

12. Werkzeughalter gemäß Anspruch 11, wobei
wobei die senkrecht stehende Halteplatte (41) einen von der Abstützung (2) weg schräg nach oben gerichteten Flansch und/oder einen an der Seite der senkrecht stehenden Halteplatte (41), die der Abstützung (2) abgewandt ist, angeordneten Griff aufweist zum Aufheben des Eingriffs/Tragens an der Werkzeugaufnahme (11).

13. Werkzeughalter gemäß Anspruch 11, wobei
das Tragegestell (45) mit dem senkrecht aufgerichteten Vorsprung (3) verbunden ist und/oder eine obere Fläche des Tragegestells (45) eine Ablagefläche für die Werkzeugaufnahme (11) ausbildet.

14. Werkzeughalter gemäß einem der Ansprüche 1 bis 13, wobei
der Werkzeughalter des weiteren eine Auflageleiste (50) aufweist, auf der der Außenumfang der Werkzeugaufnahme (11) abstützbar ist.

15. Werkzeughalter gemäß einem der Ansprüche 1 bis 14, wobei
an der Werkzeughalteeinrichtung (4) an der Seite, die zur Abstützung (2) weist, eine Drückeinrichtung in Anlage gebracht werden kann, die die Werkzeughalteeinrichtung (4) von der Abstützung (2) weg biegt/klappt, wobei die Drückeinrichtung oberhalb des Lastaufnahmeelements (42) angreift.

16. Werkzeughalteraufreihung mit
mehreren Werkzeughaltern gemäß einem der Ansprüche 1 bis 15, die in Reihe angeordnet sind.
